# EUROPÄISCHE PATENTANMELDUNG

(11) **EP 2 057 879 A1**
(43) Veröffentlichungstag der Anmeldung: **13.05.2009**
(21) Anmeldenummer: 08168288.2
(22) Anmeldetag: 04.11.2008
(51) Int. Cl.: A01D 39/00, A01F 15/08, B65B 27/12

(54) **Verfahren und Vorrichtung zum Antrieb für die Bindenadeln von Großballenpressen**

(30) Priorität: 09.11.2007 DE 102007000676
(71) Anmelder: Raussendorf Maschinen- und Geraetbau GmbH, 02692 Obergurig (DE)
(72) Erfinder: Dipl.-Ing. Porsche, Andreas, 01169, Dresden (DE); Dipl.-Ing. Anders, Katharina, 01809, Dohna (DE)
(74) Vertreter: Sperling, Thomas

(57) **Zusammenfassung**

Die Erfindung betrifft eine Vorrichtung zum Antrieb für die Bindenadeln einer Großballenpresse, insbesondere für landwirtschaftliches Erntegut, wobei die Bindegarnzuführung zu einer Knotereinrichtung durch eine Bindenadel (2) erfolgt und die Vorrichtung insbesondere **dadurch gekennzeichnet, dass** auf einer Knoterwelle (1) oder einer mit dieser antriebsverbundenen Welle ein Umlaufrädergetriebe (3) zur abtriebsseitigen Erzeugung einer Hypozykloide angeordnet ist, wobei das Umlaufrädergetriebe (3) mit einer Koppelstange (7) in Antriebsverbindung steht und die Koppelstange (7) mit einem Schwingarm (8) verbunden ist, welcher über eine Nadelhalterung (10) die Schwenkbewegung des Schwingarms (8) an die Bindenadel (2) überträgt, wobei das Umlaufrädergetriebe (3) derart dimensioniert ist, dass bei einer gleichmäßigen Umdrehung der Knoterwelle (1) das freie Ende der Bindenadel (2) in einer oberen Endstellung während der Knotenbildung verharrend oder nahezu verharrend ausgebildet ist.

## Beschreibung

Die Erfindung bezieht sich auf ein Verfahren und eine Vorrichtung zum Antrieb für die Bindenadeln von Großballenpressen. Derartige Großballenpressen sind landwirtschaftliche Maschinen, in denen beispielsweise Stroh, Heu, Silage und nachwachsende Rohstoffe zu kompakten Ballen gepresst werden, welche dann mit Fäden bzw. Bindegarn umschlungen und weitgehend in der gepressten Form fixiert gehalten werden. Weitere Anwendungsgebiete für den Einsatz von Bindenadeln zugehörigen Knotereinrichtungen sind Müll- oder Abfallpressen.

Der Faden bzw. das Bindegarn wird durch die Bindenadeln zum Teil um den Großballen herum geführt und an der Knotereinrichtung zur Bildung der Knoten positioniert.
Bei den bekannten Antrieben für die Bindenadeln von Großballenpressen wird die Schwenkbewegung der Bindenadeln von der Drehbewegung der Knoterwelle abgeleitet. Zu diesem Zweck ist auf der Knoterwelle eine Kurbel befestigt, an der eine Koppelstange gelenkig angeschlossen ist, die mit einem Schwingarm verbunden ist, dessen Schwenkbewegung zu den Bindenadeln übertragen wird. Ein derartiger Antrieb ist beispielsweise aus der Figur 1 der DE 197 09 604 A1 ersichtlich.

Auch bei der aus der DE 28 20 241 A1 bekannten Großballenpresse für Heu oder Stroh werden die Bindenadeln auf diese Weise angetrieben. Da sich bei diesem Antriebssystem die Bindenadeln von der unteren bis zur oberen Totpunktlage mit einer gleichmäßig hohen Geschwindigkeit bewegen, steht im Knoterbereich auch nur eine kurze Zeitspanne für die Überleitung des Bindearms zu den Knoterschnäbeln zur Verfügung. Dies wirkt sich nachteilig auf die Bindesicherheit aus, da Fehlknotungen sowie Störungen im Funktionsablauf auftreten, so dass die bekannten Antriebssysteme für die Bindenadeln nicht ohne zusätzliche geeignete Mittel zur Fadenhalterung während des Knotprozesses geeignet sind. Aus diesem Grund werden im Stand der Technik zusätzliche Fadenhalter eingesetzt, die den von der Bindenadel zugeführten Faden während des Knotprozesses von der Bindenadel übernehmen und halten.

Der Erfindung liegt die Aufgabe zugrunde, die Fadenführung und Halterung so auszuführen, dass eine zuverlässige Arbeitsweise und eine hohe Funktionssicherheit beim Knotervorgang gewährleistet ist und dass die Lösung konstruktiv einfach, robust und kostengünstig ausführbar ist.

Überraschenderweise wurde die Aufgabe konzeptionsgemäß dadurch gelöst, dass durch den Einsatz eines speziellen Getriebes zum Antrieb der Bindenadel auf zusätzliche Mittel zur Fadenhalterung, insbesondere bei Zweifadensystemen mit Ober- und Unterfaden, verzichtet werden kann. Dadurch ist die Funktion der Halterung in den Antrieb der Bindenadel implementiert, wodurch eine konstruktiv einfache und kostengünstige sowie wartungsfreundliche Lösung entstanden ist.

Die Vorrichtung zum Antrieb für die Bindenadeln einer Großballenpresse, insbesondere für landwirtschaftliches Erntegut, wobei die Bindegarnzuführung zu einer Knotereinrichtung durch eine Bindenadel erfolgt, ist insbesondere dadurch gekennzeichnet, dass auf einer Knoterwelle oder einer mit dieser antriebsverbundenen Welle ein Umlaufrädergetriebe zur abtriebsseitigen Erzeugung einer Hypozykloide angeordnet ist, wobei ein Umlaufrad des Umlaufrädergetriebes mit einer Koppelstange in Antriebsverbindung steht und die Koppelstange mit einem Schwingarm verbunden ist, welcher über eine Nadelhalterung die Schwenkbewegung des Schwingarms an die Bindenadel überträgt, wobei die mechanische Kopplung derart dimensioniert ist, dass bei einer gleichmäßigen Umdrehung der Knoterwelle das freie den Faden führende und haltende Ende der Bindenadel in einer oberen Endstellung während der Knotenbildung verharrend bzw. nahezu verharrend ausgebildet ist. Dies bedeutet, dass sich die Bindenadel nur geringfügig im oberen Totpunkt bewegt und dadurch sichergestellt ist, dass die Knotenbildung nicht durch eine zu schnelle Bewegung der Bindenadel erschwert wird.

Konzeptionsgemäß führt der Einsatz eines Hypozykloidgetriebes zur erfindungsgemäßen Wirkung, dass das Faden haltende und führende freie Ende der Bindenadel während des Knotvorganges fast vollständig still steht und somit die Bindesicherheit der Knotenbildung erhöht wird.

Das erfindungsgemäße Verfahren und die Vorrichtung ermöglichen eine ausreichend große Zeitspanne, die für die Knotenbildung der Knoten zur Verfügung steht. Damit wird eine sichere Knotenbildung ermöglicht und eine hohe Leistungsfähigkeit der Großballenpressen erreicht.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:

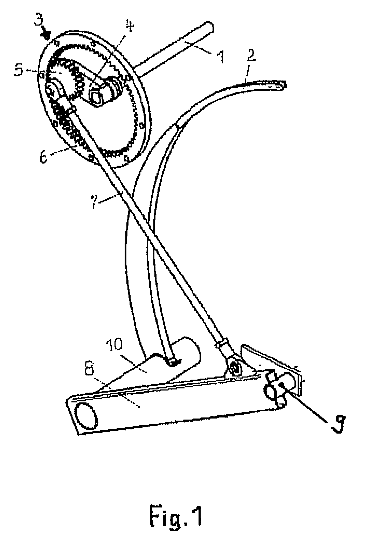

- Figur 1:: eine perspektivische Darstellung des Antriebsschemas für die Bindenadeln,

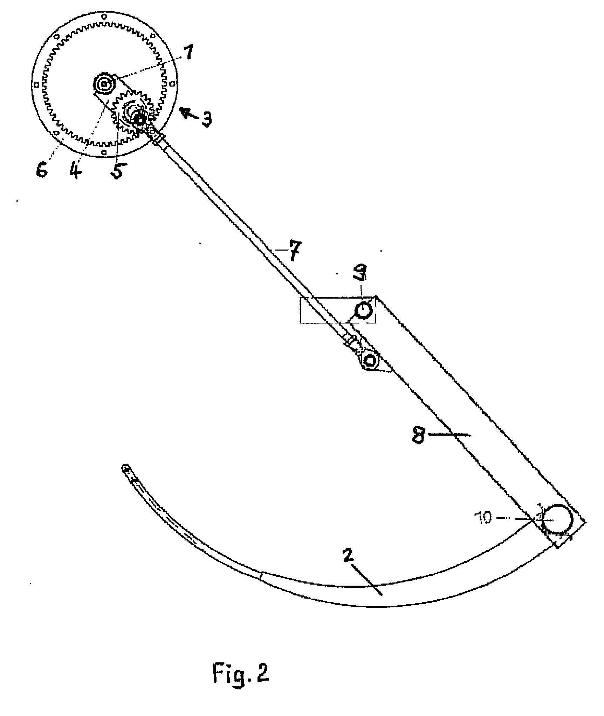

- Figur 2:: eine Seitenansicht des Antriebsschemas mit einer Bindenadel in der unteren Stellung,

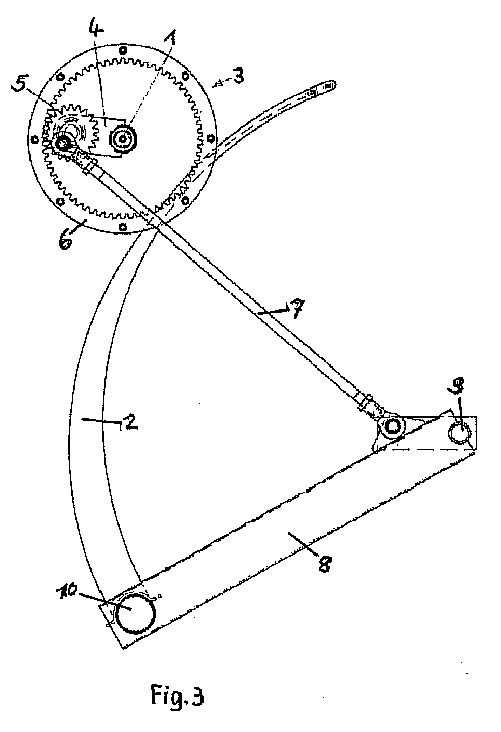

- Figur 3:: eine Seitenansicht des Antriebsschemas mit einer Bindenadel in der oberen Stellung im Knotenbildungsbereich.

Bei einer nicht dargestellten Großballenpresse für landwirtschaftliches Erntegut zur Herstellung quaderförmiger Ballen ist in einem Presskanal ein geradlinig bewegter Presskolben angeordnet. Oberhalb des Presskanals sind auf einer angetriebenen, quer zum Presskanal gelagerten Knoterwelle 1 eine oder mehrere Knotereinrichtungen mit Abstand nebeneinander angeordnet. Jeder Knotereinrichtung ist eine schwenkbewegliche Bindenadel 2 zugeordnet. Über der Bindenadel 2 erfolgt die Bindegarnzuführung zu den Knotereinrichtungen in zwei voneinander getrennten Strängen. Die gepressten Ballen werden mit den beiden Bindegarnsträngen umschlossen, die beispielsweise durch zwei mit Abstand zueinander angeordneten Knoten miteinander verbunden sind. Die jeweilige Knotenbildung erfolgt durch zwei separate, drehbar angetriebene Knoterschnäbel.

Die Bindegarnzuführung zu den beiden Knoterschnäbeln geschieht jeweils durch eine gemeinsame Bindenadel 2. Der Antrieb der Bindenadeln 2 ist so gesteuert, dass deren Schwenkbewegung während des gesamten Knotervorganges eine wesentlich geringere Geschwindigkeit als im übrigen Schwenkbereich aufweist. Dies wird dadurch erreicht, indem auf der drehbar angetriebenen Knoterwelle 1 ein Umlaufrädergetriebe 3 zur Umwandlung einer umlaufenden Drehbewegung in eine abtriebseitige Kurvenbahnbewegung in Form einer Hypozykloide angeordnet ist. Das verwendete dreigliedrige Umlaufrädergetriebe 3 besteht im Wesentlichen aus einem angetriebenen Steg 4, einem außenverzahnten Umlaufrad 5 und aus einem feststehenden innenverzahnten Mittelrad 6. Am Umlaufrad 5 ist außermittig eine Koppelstange 7 gelenkig angeschlossen, die mit einem Schwingarm 8 verbunden ist, dessen Schwenkbewegung zu den Bindenadeln 2 übertragen wird. Der Schwingarm 8 ist an einem am Pressenrahmen vorgesehenen Schwenkzapfen 9 angeordnet. Am freien Ende des Schwingarmes 8 ist eine sich über die gesamte Presskanalbreite erstreckende Nadelhalterung 10 befestigt, an der die Bindenadeln 2 angeordnet sind. Die Bindenadeln 2 führen infolge der Antriebsverbindung zu dem Umlaufrädergetriebe 3 und aufgrund der besonderen Getriebekinematik während der Knotenbildung nur eine geringfügige Bewegung in Richtung zum oberen Totpunkt aus, sodass für die Bildung der beiden Knoten eine ausreichende Zeit für den funktionssicheren Knotervorgang zur Verfügung steht. Unter Beibehaltung der erforderlichen Spannung des Bindegarns erstreckt sich die Knotenbildung beider Knoten bis zum oberen Totpunkt der Bewegung der Bindenadeln 2. Durch diese Steuerung der Bindenadeln 2 ist kein gesonderter Bindegarnhalter erforderlich, was einen außerordentlichen Vorteil der Ausgestaltung gegenüber Bindenadelsystemen aus dem Stand der Technik darstellt.

### LISTE DER BEZUGSZEICHEN

- 1: Knoterwelle
- 2: Bindenadel
- 3: Umlaufrädergetriebe
- 4: Steg
- 5: Umlaufrad
- 6: Mittelrad
- 7: Koppelstange
- 8: Schwingarm
- 9: Schwenkzapfen
- 10: Nadelhalterung

## Patentansprüche

1. Vorrichtung zum Antrieb für die Bindenadeln einer Großballenpresse, insbesondere für landwirtschaftliches Erntegut, wobei die Bindegarnzuführung zu einer Knotereinrichtung durch eine Bindenadel (2) erfolgt, **dadurch gekennzeichnet, dass** auf einer Knoterwelle (1) oder einer mit dieser antriebsverbundenen Welle ein Umlaufrädergetriebe (3) zur abtriebsseitigen Erzeugung einer Hypozykloide angeordnet ist, wobei das Umlaufrädergetriebe (3) mit einer Koppelstange (7) in Antriebsverbindung steht und die Koppelstange (7) mit einem Schwingarm (8) verbunden ist, welcher über eine Nadelhalterung (10) die Schwenkbewegung des Schwingarms (8) an die Bindenadel (2) überträgt, wobei das Umlaufrädergetriebe (3) derart dimensioniert ist, dass bei einer gleichmäßigen Umdrehung der Knoterwelle (1) das freie Ende der Bindenadel (2) in einer oberen Endstellung während der Knotenbildung verharrend oder nahezu verharrend ausgebildet ist.

2. Vorrichtung nach Anspruch 1, **dadurch gekennzeichnet, dass** das Umlaufrädergetriebe (3) als dreigliedriges Hypozykloidgetriebe ausgebildet ist.

3. Vorrichtung nach Anspruch 1 oder 2, **dadurch gekennzeichnet, dass** das Umlaufrädergetriebe (3) aus einem angetriebenen Steg (4), einem außenverzahnten Umlaufrad (5) und aus einem feststehenden innenverzahnten Mittelrad (6) ausgebildet ist.

4. Vorrichtung nach Anspruch 3, **dadurch gekennzeichnet, dass** die Koppelstange (7) gelenkig und außermittig am Umlaufrad (5) angeschlossen ist.

5. Vorrichtung nach einem der Ansprüche 1 bis 4, **dadurch gekennzeichnet, dass** der Schwingarm (8) an einem am Pressenrahmen vorgesehenen Schwenkzapfen (9) angeordnet ist.

6. Vorrichtung nach einem der Ansprüche 1 bis 5, **dadurch gekennzeichnet, dass** am freien Ende des Schwingarmes (8) eine sich über die gesamte Presskanalbreite erstreckende Nadelhalterung (10) befestigt ist.

7. Vorrichtung nach einem der Ansprüche 1 bis 6, **dadurch gekennzeichnet, dass** durch die Bewegungsart und die Ausbildung der Bindenadel (2) ein Bindegarnhalter ersetzt wird.
